# DEMANDE DE BREVET EUROPEEN

(11) **EP 3 142 367 A1**
(43) Date de publication de la demande: **15.03.2017**
(21) Numéro de dépôt: 16187846.7
(22) Date de dépôt: 08.09.2016
(51) Int. Cl.: H04N 21/234

(54) **PROCÉDÉ DE GESTION DE LA RESTITUTION DE CONTENUS PUBLICITAIRES**

(30) Priorité: 10.09.2015 FR 1558448
(71) Demandeur: Orange, 75015 Paris (FR)
(72) Inventeur: GENDRIN, Matthieu, 25250 St Aubin d'Aubigné (FR); CAZOULAT, Renaud, 35760 Saint Gregoire (FR); MORVILLEZ, Erwan, 35000 RENNES (FR)

(57) **Abrégé**

L'invention a pour objet un procédé de gestion de la restitution de contenus incluant un contenu d'un premier type (CNT) et un contenu d'un second type (PUB) ; certaines plages temporelles (PL1-PL3) étant dédiées à la lecture de contenus du second type, les contenus étant aptes à être manipulés via un dispositif de commande le procédé est caractérisé en ce qu'une réception d'une commande de manipulation d'un contenu du second type pendant une plage temporelle entraîne la restitution d'un autre contenu du second type.

## Description

### Domaine technique

L'invention se rapporte à un procédé de gestion de la restitution de contenus, en particulier de publicités audio et/ou vidéo.

L'invention s'applique à tous types de contenus qu'ils soient diffusés en direct ou en différé. Rappelons que le mode différé est offert grâce à des applications de télévision à la demande ou de vidéo à la demande, ou de tout autre outil équivalent.

D'une manière générale, l'invention peut être mise en oeuvre dans tous types de média dans lesquels les contenus sont des contenus numériques ; de tels médias sont par exemple, la radio, la télévision, les médias de type Réseaux sociaux ( Facebook, Twitter, etc.), les jeux vidéos, Internet, etc. l'exemple ci-dessous se basera sur la télévision, tout particulièrement sur une application dite de télévision à la demande. Cependant, l'invention ne se limite pas à cet exemple mais peut s'étendre à d'autres cas d'usages.

### Etat de la technique

On distinguera dans la suite deux types de contenus multimédias, à savoir :
- un premier contenu multimédia ayant pour objet un contenu demandé par un consommateur, comme par exemple une vidéo.
- un deuxième contenu multimédia, par exemple ayant pour objet une publicité, ci-après désigné par le terme publicité ;

Aujourd'hui, un consommateur peut commander des contenus du premier type depuis un dispositif de communication au travers d'un réseau de communication. Le dispositif de communication visé est par exemple un décodeur numérique couplé à une passerelle d'accès au réseau internet. Le décodeur est équipé pour cela de moyens tels qu'une application de télévision à la demande (TVoD). Cette application (TVod) permet notamment de commander un contenu et de requérir sa restitution sur un dispositif de restitution ; dans le contexte de la télévision à la demande, la restitution du contenu commandé s'accompagne de plus en plus souvent d'une restitution d'une voire de plusieurs publicités. Les publicités peuvent être restituées avant la restitution de la vidéo ou au cours de la vidéo.

Dans certains média, la publicité commerciale audiovisuelle (audio ou vidéo) est structurée en « tunnels de publicités » où sont enchaînées des publicités sans action possible sur le contenu qui permettrait par exemple une accélération de la lecture de la publicité ou un passage au contenu commandé. Ce modèle a pour objectif d'imposer à un utilisateur souhaitant accéder à la vidéo une lecture d'au moins une publicité ou d'une parte de celle-ci.

Les inventeurs ont constaté que pendant la durée consacrée à la publicité, certaines commandes sont inhibées ; en d'autres mots, pour garantir que l'utilisateur voit toute la publicité, les commandes du type avance rapide ou passage au contenu suivant sont inopérantes ; un message sur l'écran peut éventuellement indiquer que la commande en question est interdite. Ce mode de diffusion impose à l'utilisateur (spectateur) une suite de publicités dont certaines ne vont pas l'intéresser. Ces publicités « inutiles » représentent un désagrément pour l'utilisateur, mais aussi un manque à gagner pour le diffuseur qui aurait pu passer une autre publicité plus ciblée à la place.

L'invention offre une solution ne présentant pas les inconvénients de l'état de la technique.

### L'invention

A cet effet, selon un aspect fonctionnel, l'invention a pour objet un procédé de gestion de la restitution de contenus incluant un contenu d'un premier type et des contenus d'un second type, une plage temporelle étant dédiée à la lecture des contenus du second type, les contenus étant aptes à être manipulés via un dispositif de commande, caractérisé en ce qu'une réception d'une commande de manipulation d'un contenu du second type dans la plage temporelle entraîne la sélection d'un autre contenu du second type pour être restitué.

Selon l'invention, pendant la plage temporelle visée ci-dessus, fixée au préalable, une commande vouée à être inopérante dans l'état de la technique devient opérante ; en l'espèce, une commande du type avance rapide ou passage au contenu suivant n'est pas inhibée mais au contraire entraîne la restitution d'un autre contenu du second type par exemple une autre publicité.

Plus généralement, tout ou partie des commandes de manipulations disponibles sur le dispositif de commande, sont transformées en commande de sélection d'un autre contenu du second type.

Précisons ici qu'une commande inopérante signifie que la commande lorsqu'elle est exécutée ne remplit pas sa fonction première. Par exemple si une commande a pour fonction de réaliser une avance rapide sur un contenu, lorsqu'elle est inopérante cela signifie que l'avance rapide n'est pas réalisée ; dans ce cas, soit la fonction de la commande est modifiée, soit elle est ignorée. Modifier une fonction consiste par exemple à remplacer la fonction première par une autre fonction par exemple un affichage d'un message sur un écran, informant par exemple que la commande ne peut pas être exécutée.

L'invention trouve une application dans les tunnels de publicité de radio et de télévision. L'invention permet à l'auditeur (/au spectateur) de ne pas regarder les publicités qui ne l'intéressent pas. L'intérêt pour l'annonceur est d'une part un gain d'attention de l'auditeur (/spectateur), et aussi un plus grand nombre de publicité intéressant l'auditeur (/spectateur) dans la même période de temps fixée ou plage temporelle.

Il en résulte une période temporelle de restitution au moins égale à à la période fixée au préalable. En effet, on verra dans la suite que cette la durée de restitution peut être supérieure à la plage temporelle fixée.

En d'autres mots, au moins jusque la fin de la plage temporelle fixée, une réception d'une commande de manipulation d'un contenu du second type dans la plage temporelle entraîne la sélection d'un autre contenu du second type pour être restitué.

Selon un mode de mise en oeuvre particulier de l'invention, les contenus du second type sont sélectionnés en fonction d'un profil établi à la base d'un historique des contenus du second type restitués. Plus particulièrement le profil est basé sur des contenus du second type restitués au-delà d'une certaine durée. De cette manière, les publicités qui viennent remplacer une publicité sont choisies judicieusement en fonction notamment des goûts de l'utilisateur. Le profil évolue ainsi dans le temps de manière à réduire le nombre de réception de commandes de manipulation pendant la plage temporelle.

Selon un mode de mise en oeuvre particulier de l'invention, qui pourra être mis en oeuvre alternativement ou cumulativement avec le précédent, au moins une condition est vérifiée avant la restitution du contenu du premier type. Plus particulièrement, une condition est une durée minimum de restitution d'au moins un contenu du second type. En effet, comme le procédé de l'invention vient altérer les temps de restitution des publicités, ce mode et cette variante viennent garantir le respect de conditions liées à la restitution notamment la durée minimum de restitution requise pour accéder à un contenu du premier type.

Selon un mode de mise en oeuvre particulier de l'invention, qui pourra être mis en oeuvre alternativement ou cumulativement avec les précédentes, lorsque la plage temporelle est terminée, si ladite au moins une condition n'est pas respectée, les commandes de manipulation de contenu sont inopérantes jusqu'à ce que ladite au moins une condition soit respectée. En effet, sans cette variante, il pourrait arriver qu'à l'issue de la plage temporelle les conditions ne soient pas satisfaites ; pour assurer le respect des conditions dans tous les cas, si ces dernières ne sont pas satisfaites à l'expiration de la plage, les commandes reçues sont inopérantes. Il en résulte ici une durée de restitution supérieure à plage temporelle fixée au préalable.

Selon un mode de mise en oeuvre particulier de l'invention, qui pourra être mis en oeuvre alternativement ou cumulativement avec les précédentes, une commande de manipulation est l'une des commandes suivantes :
a. une commande d'avancement relative au contenu du second type ;
b. une commande de passage au contenu du premier type.

Il existe généralement plusieurs commandes de manipulation possibles. Selon ce mode, seule une partie des commandes de manipulation sont concernées par l'invention. Par exemple, seules les commandes représentatives d'un souhait d'avancement relativement au contenu du second type sont concernées.

Selon un mode de mise en oeuvre particulier de l'invention, qui pourra être mis en oeuvre alternativement ou cumulativement avec les précédentes, le contenu du second type est un contenu publicitaire.

Selon un aspect matériel, l'invention se rapporte à une entité de gestion apte à gérer la restitution de contenus incluant un contenu d'un premier type et un contenu d'un second type, une plage temporelle étant dédiée à la lecture des contenus du second type, les contenus étant aptes à être manipulés via un dispositif de commande, caractérisé en ce que l'entité comprend un module de réception apte à recevoir une commande de manipulation d'un contenu du second type dans la plage temporelle, et un module de gestion apte à sélectionner un autre contenu du second type suite à la réception d'une commande de manipulation dans la plage.

Selon un autre aspect matériel, l'invention concerne un dispositif comprenant une entité telle que définie ci-dessus.

Selon un autre aspect matériel, l'invention concerne un programme d'ordinateur apte à être mis en oeuvre sur une entité telle que définie ci-dessus, le programme comprenant des instructions de code qui, lorsqu'il est exécuté par un processeur, réalise les étapes du procédé définies ci-dessus.

Selon un autre aspect matériel, l'invention concerne un support de données sur lequel a été mémorisée au moins une série d'instructions de code de programme pour l'exécution d'un procédé défini ci-dessus.

L'invention sera mieux comprise à la lecture de la description qui suit, donnée à titre d'exemple et faite en référence aux dessins annexés sur lesquels :
La figure 1 représente une vue schématique d'un système informatique sur lequel est illustré un exemple de réalisation de l'invention.
La figure 2 est un algorithme illustrant les étapes du procédé de l'invention.
La figure 3 illustre des échanges de données entre différentes éléments d'un système informatique selon un mode de réalisation de l'invention.
La figure 4 est une vue représentative des différentes publicités restituées selon l'état de la technique et selon le mode de réalisation de la figure 3.

### Description détaillée d'un exemple de réalisation illustrant l'invention

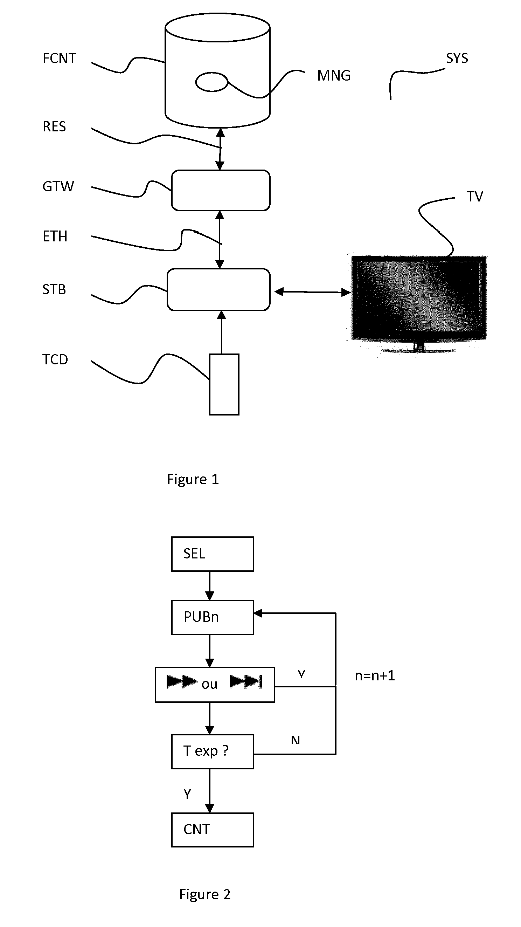

La figure 1 représente un système SYS comprenant un dispositif STB apte à gérer la restitution d'un contenu et à requérir une restitution du contenu.

Le contenu peut être stocké sur un support de données tel qu'un disque DVD (sigle de «Digital Versatile Disc »), une carte SD (sigle de « Secure Digital »), ect. Le contenu peut aussi être issu d'un réseau de communication RES auquel est connecté le dispositif.

Dans notre exemple, ce dispositif STB est un décodeur TV apte à communiquer avec un fournisseur de contenus FCNT au travers d'un réseau de communication RES. Le décodeur a pour fonction notamment de recevoir un contenu CNT, de le transformer si besoin pour une restitution sur un écran qui peut être intégré au décodeur ou externe au décodeur. Une transformation est par exemple un décodage.

Dans notre exemple, le décodeur est connecté au fournisseur via une passerelle domestique GTW et connecté à la passerelle via un câble Ethernet ETH. La passerelle comprend des moyens pour communiquer avec le réseau RES. Le réseau est par exemple un réseau étendu WAN (sigle de Wide Area Network).

Le décodeur STB est manipulable via un dispositif de commande TCD tel qu'une télécommande TCD. Cette télécommande comporte une pluralité de touches aptes à émettre des commandes de manipulation respectives. A réception d'une commande, le décodeur exécute la commande.

Parmi les touches certaines permettent une manipulation d'un contenu restitué, les principales touches connues sont par exemple les suivantes
- 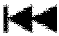 PREV: pour relire le contenu depuis le début
- 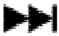 NEXT: pour avancer au contenu suivant.
- ◄◄ (marche arrière rapide): pour lire une émission en marche arrière rapide.
- ►► (avance rapide): pour lire une émission en mode avance rapide.

Comme indiqué ci-dessus, dans le contexte de la télévision à la demande, certains contenus peuvent être diffusés par le fournisseur de contenu en échange d'une restitution d'une voire de plusieurs publicités sur l'écran TV. Ces contenus sont par exemple ceux accessibles via une application dite de télévision à la demande (sigle TVOD) appelé aussi « tv catch-up » ou « replay tv ». Dans ce contexte, une sélection d'un contenu CNT entraîne la restitution d'une publicité PUB ; la publicité peut être restituée avant, prenant ou après la contenu sélectionné.

Rappelons encore ici que l'invention ne se limite pas à l'application Tvod mais s'étend à toutes autres applications dans lesquelles des contenus peuvent être restitués. D'autres applications possibles sont par exemple, la télévision « en direct », une application de vidéo à la demande, etc.

Le contenu publicitaire est restituée au cours d'une plage temporelle de durée T. Selon l'invention, la réception d'une commande de manipulation pendant la plage temporelle T consacrée à la publicité, va entraîner, lorsqu'elle est exécutée, une fourniture d'une autre publicité que la publicité en cours de restitution.

Dans notre exemple, le principe de l'invention est mis en oeuvre que pour une partie des commandes de manipulation à savoir les commandes représentatives d'un souhait d'avancement, dites par la suite commandes d'avancement, à savoir l'avance rapide et avancer au contenu suivant.

On constate que la réception d'une commande de manipulation dans la plage temporelle T a pour conséquence un arrêt d'une publicité ; cette dernière est en conséquence écourtée. Une variante décrite ci-dessous a trait à la gestion du temps de restitution T dans ce cas-là.

La gestion est faite au moyen d'une entité de gestion MNG dont la localisation est indifférente. Dans notre exemple, l'entité est localisée dans le fournisseur de services FCNT mais pourrait très bien être localisé hors du fournisseur à savoir sur la passerelle GTW, le décodeur STB, le téléviseur TV, etc.

Les étapes d'un mode de réalisation vont être décrites en référence à la figure 2.

Lors d'une première phase PH1 (SEL), l'utilisateur sélectionne un contenu (CNT) par exemple une vidéo au moyen d'une application de télévision à la demande. Une commande SEL est émise depuis la télécommande TCD à destination du décodeur STB qui transfère la commande au fournisseur FCNT.

Lors d'une deuxième phase PH2, le fournisseur de contenu diffuse au moins une publicité PUBn ; s'il y en a plusieurs, les unes à la suite des autres. Les étapes réalisées lors de cette deuxième phase PH2 sont par exemple les suivantes a deuxième phase PH2 comprend en outre les étapes ET1-ET4 suivantes.

Lors d'une première étape ET1, le décodeur reçoit une première publicité PUBn et requiert une restitution sur l'écran de cette publicité.

Ensuite, pendant la durée T visée ci-dessus, une commande est émise depuis la télécommande et reçue par l'entité de gestion lors d'une deuxième étape ET2.

A ce stade, l'entité MNG vérifie lors d'une troisième étape ET3 si la commande est une commande d'avancement. Si oui, l'entité de gestion requiert une diffusion d'une nouvelle publicité PUBn+ 1. Dans la négative, le procédé se poursuit normalement en poursuivant la restitution de la publicité PUBn en cours.

A noter que la nouvelle publicité PUBn+1 peut être issue d'une liste préétablie par le fournisseur ou une nouvelle publicité choisie à la volée. De préférence, les publicités sont sélectionnées en fonction d'un profil établi à la base d'un historique des contenus du second type restitués au-delà d'une certaine durée. En effet, une restitution d'une publicité au-delà d'une certaine durée peut un indice d'un attrait qu'à l'utilisateur pour cette publicité ou plus généralement pour la catégorie à laquelle appartient la publicité (catégorie auto, catégorie Ménage, etc.).

Lors d'une étape ET4, à la fin de la restitution de la publicité PUBn+1, l'entité de gestion vérifie si la durée T prévue pour la restitution des publicités est expirée. Dans la négative, une nouvelle publicité PUBn+2 est diffusée ; dans l'affirmative, le contenu CNT commandé est restitué.

Le mode de réalisation décrit ci-dessus peut faire l'objet de variantes décrites ci-dessous.

Dans notre exemple, pour obtenir une nouvelle publicité, le décodeur STB émet une requête à destination du fournisseur de contenus FCNT. Le fournisseur de service répond et transmet la nouvelle publicité. Selon une première variante, le décodeur STB peut recevoir plusieurs publicités et les stocke dans une mémoire interne ou externe (non représentée) au décodeur. Pendant la plage temporelle T, le décodeur se charge de requérir la restitution des publicités sur l'écran ; cette variante évite une transmission de plusieurs requêtes à destination du fournisseur de contenus.

Dans cette variante, l'entité de gestion MNG est localisé de préférence dans le décodeur STB. Dans cette configuration, les étapes de la deuxième phase PH2 sont les mêmes que décrites précédemment, à la différence que l'entité MNG requiert la restitution au lieu de la diffusion. En d'autres mots, l'entité vérifie lors d'une troisième étape ET3 que la commande est une commande d'avancement. Si oui, l'entité de gestion requiert une restitution d'une nouvelle publicité PUBn+1.

Selon une deuxième variante, au moins une condition (C) est vérifiée avant la restitution du contenu du premier type.

La condition C peut être une durée minimum de restitution d'au moins un contenu du second type dans la plage temporelle T.

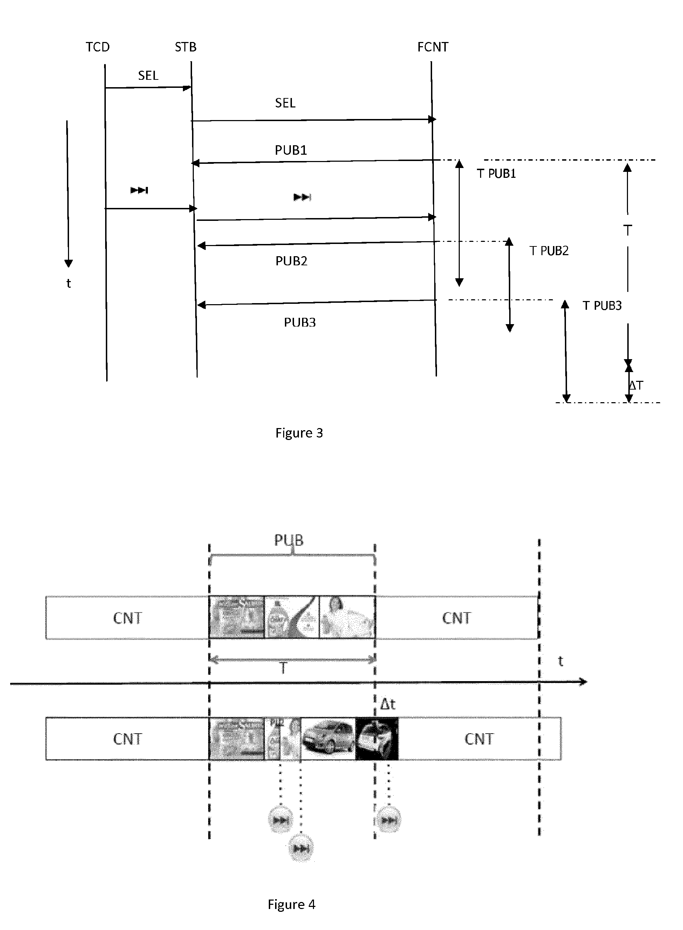

La figure 3 illustre ce mode de réalisation cas. Dans cet exemple, supposons que la condition est la restitution de deux publicités dans leur intégralité dans la plage T.

Lors de la première étape ET1, une commande est émise depuis la télécommande à destination du décodeur qui transfère cette commande au fournisseur FCNT.

Le fournisseur émet ensuite à destination du décodeur reçoit une première publicité PUB1 et requiert une restitution sur l'écran de cette publicité.

Ensuite, pendant la plage temporelle, une commande d'avancement est émise depuis la télécommande TCD et reçue par l'entité de gestion MNG lors d'une deuxième étape ET2. A ce stade, l'entité de gestion MNG vérifie lors d'une troisième étape ET3 si la commande est une commande d'avancement. Dans notre exemple c'est le cas. En conséquence, l'entité de gestion requiert l'arrêt de la restitution de la première publicité et requiert une restitution d'une nouvelle publicité.

A l'issue de la restitution de la deuxième publicité PUB2, comme la durée T n'a pas expirée du fait de l'arrêt de la première publicité avant la fin de sa restitution, le procédé se poursuit, une troisième publicité PUB3 est restituée.

Dans notre exemple, la condition étant la restitution de deux publicités, la troisième publicité est restituée jusque la fin au-delà de la durée T. Une durée supplémentaire ΔT est donc ajoutée à la durée T pour que la condition C soit satisfaite ; la durée supplémentaire est choisie de telle sorte que la troisième publicité puisse être restituée entièrement.

Selon une variante, lorsque la plage temporelle (T) est terminée, si ladite au moins une condition (C) n'est pas respectée, les commandes de manipulation de contenu sont ignorées jusqu'à ce que ladite au moins une condition (C) soit respectée. La figure 4 illustre ce cas ; une commande est émise dans le délai supplémentaire ΔT. la commande est ignorée et la restitution de la troisième publicité PUB3 se poursuit.

Pour la mise en oeuvre de l'invention, l'entité de gestion comprend un module de réception apte à recevoir une commande de manipulation d'un contenu du second type dans la plage temporelle, et un module de gestion apte à sélectionner un autre contenu du second type suite à la réception d'une commande de manipulation dans la plage.

A noter que le terme entité utilisé ci-dessus peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les dispositifs concernés. De la même manière, un composant matériel correspond à tout élément d'un ensemble matériel (ou hardware) apte à mettre en oeuvre une fonction ou un ensemble de fonctions pour le dispositif concerné (circuit intégré, carte à puce, carte à mémoire, etc.).

## Revendications

1. Procédé de gestion de la restitution de contenus incluant un contenu d'un premier type (CNT) et des contenus d'un second type (PUBn), une plage temporelle (T) étant dédiée à la lecture des contenus du second type, les contenus étant aptes à être manipulés via un dispositif de commande, **caractérisé en ce qu'**une réception d'une commande de manipulation d'un contenu du second type dans la plage temporelle entraîne la sélection d'un autre contenu du second type pour être restitué.

2. Procédé selon la revendication 1, **caractérisé en ce que** les contenus du second type sont sélectionnés en fonction d'un profil établi à la base d'un historique des contenus du second type restitués.

3. Procédé selon la revendication 2, **caractérisé en ce que** le profil est basé sur des contenus du second type restitués au-delà d'une certaine durée.

4. Procédé selon la revendication 1, **caractérisé en ce qu'**au moins une condition (C) est vérifiée avant la restitution du contenu du premier type.

5. Procédé selon la revendication 3, **caractérisé en ce qu'**une condition (C) est une durée minimum de restitution d'au moins un contenu du second type.

6. Procédé selon la revendication 3, **caractérisé en ce que** lorsque la plage temporelle (T) est terminée, si ladite au moins une condition (C) n'est pas respectée, les commandes de manipulation de contenu sont inopérantes jusqu'à ce que ladite au moins une condition (C) soit respectée.

7. Procédé selon la revendication 1, **caractérisé en ce qu'**une commande de manipulation est l'une des commandes suivantes :
a. une commande d'avancement relative au contenu du second type (PUBn) ;
b. une commande de passage au contenu du premier type (CNT).

8. Procédé selon la revendication 1, **caractérisé en ce que** le contenu du second type est un contenu publicitaire.

9. Entité de gestion (MNG) apte à gérer la restitution de contenus incluant un contenu d'un premier type (CNT) et un contenu d'un second type (PUB), une plage temporelle (T) étant dédiée à la lecture des contenus du second type, les contenus étant aptes à être manipulés via un dispositif de commande, **caractérisé en ce que** l'entité comprend un module de réception apte à recevoir une commande de manipulation d'un contenu du second type dans la plage temporelle, et un module de gestion apte à sélectionner un autre contenu du second type suite à la réception d'une commande de manipulation dans la plage.

10. Dispositif (STB,GTW,FCNT) comprenant une entité telle que définie dans la revendication 9.

11. Programme d'ordinateur apte à être mis en oeuvre sur une entité telle que définie dans la revendication 9, le programme comprenant des instructions de code qui, lorsqu'il est exécuté par un processeur, réalise les étapes du procédé définies dans la revendication 1.

12. Support de données sur lequel a été mémorisée au moins une série d'instructions de code de programme pour l'exécution d'un procédé selon la revendication 1.
